# EUROPÄISCHE PATENTSCHRIFT

(11) **EP 2 228 235 B1**
(45) Veröffentlichungstag und Bekanntmachung des Hinweises auf die Patenterteilung: **06.06.2012**
(21) Anmeldenummer: 10154885.7
(22) Anmeldetag: 26.02.2010
(51) Int. Cl.: B60B 5/02, B60B 21/02, B60B 21/06

(54) **Hohlkammerfelge mit Verstärkung für ein Fahrrad**
Hollow rim with reinforcement for a bicycle
Jante à chambre creuse dotée d'un renforcement pour un vélo

(30) Priorität: 13.03.2009 DE 102009012999
(43) Veröffentlichungstag der Anmeldung: 15.09.2010
(73) Patentinhaber: Klieber, Jochen, 83342 Tacherting (DE)
(72) Erfinder: Klieber, Jochen, 83342 Tacherting (DE)
(74) Vertreter: Maiwald Patentanwalts GmbH

(56) Entgegenhaltungen:
- EP-A1- 2 033 809
- DE-A1-102006 010 445
- DE-A1-102007 052 674
- US-B1- 7 377 595

## Beschreibung

### GEBIET DER ERFINDUNG

Die Erfindung betrifft eine Hohlkammerfelge für ein Zweirad mit einem inneren und einem äußeren Felgenboden, sowie ein Laufrad mit einer Hohlkammerfelge.

### HINTERGRUND DER ERFINDUNG

Heutige Fahrräder, insbesondere Fahrräder für den Mountainbikebereich, werden immer größeren Belastungen unterworfen. Die Laufräder solcher Fahrräder müssen somit im Fahrbetrieb mit minimalem Eigengewicht erhebliche Kräfte aufnehmen. Die häufig anzutreffenden Speichenlaufräder bestehen im Wesentlichen aus Nabe, Speichen, Felge und Reifen, der meist mit einem Innenschlauch versehen ist. Den Speichen kommt die Aufgabe zu, die Felge unter eine hohe Vorspannung zu setzen und die Zugkräfte von der Felge auf die Nabe zu übertragen.

Der Radfahrer nimmt im Fahrbetriebs das Massenträgheitsmoment von Speichenlaufräder hauptsächlich während eines Beschleunigungsvorgangs wahr. Es ist bekannt, dass für die Beschleunigung der Laufräder zuerst das Gesamtgewicht des Laufrades entscheidend ist und erst an zweiter Stelle die Verteilung der Massen steht, wobei sich bei einer vorgegebenen Masse das Massenträgheitsmoment erhöht, je weiter sich die Masse von ihrem Drehpunkt entfernt. Daher werden die Laufräder seitens der Hersteller auf minimales Eigengewicht getrimmt. Um dabei sowohl das Gesamtgewicht als auch das Massenträgheitsmoment eines Speichenlaufrades mit einem bestimmten Durchmesser, beispielsweise 26", wirkungsvoll zu reduzieren, wird seitens der Hersteller versucht, neben dem Schlauch und dem Reifen auch bei der Felge Gewicht einzusparen.

Gerade bei der Gewichtsreduzierung von Felgen hat sich jedoch gezeigt, dass durch den vom Markt geforderten Leichtbau der Laufräder solche gewichtsreduzierte Felgen teilweise den im Fahrbetrieb auftretenden Biege- und Torsionsbelastungen nicht mehr standhalten, so dass Speichen ihre Spannung aufgrund einer plastischen Verformung in diesem durch die Speichen überbeanspruchten Bereich der Felge verlieren oder dass die Überbeanspruchung der Felge zu einer ungleichmäßigen Kraftverteilung innerhalb der Felge und damit zu einer Überbeanspruchung der Speichen führt, wobei die Überbeanspruchung der Speichen zu einem Reißen dieser führen kann. Auch sind Fälle bekannt geworden, bei denen Speichen während des Fahrbetriebs aus der Felge gerissen wurden und dadurch die Felge zerstört wurde.

Die gattungsgemäße US 7,377,595 B1 beschreibt eine Felge eines Laufrads für ein Fahrrad, bei der ein Hohlkammerquerschnitt ausgebildet ist und auf dem zur Nabe hin orientierten Felgenboden eine zusätzliche Verstärkung in Form einer umlaufend aufgebrachten Kohlefaserschicht vorgesehen ist, die im Bereich der Öffnungen für die Befestigung der Speichennippel Verstärkungseinlagen aufweist und sich über die seitlichen Felgenränder hin zieht. DE 102007052674 A1 beschreibt eine Fahrradfelge mit einem Hohlkammerquerschnitt, bei der auf dem äußeren Felgenboden und den seitlichen Wandflächen bis hin zu den Anlageflächen für Bremsklötze einer Felgenbremse Verstärkungsbahnen umlaufend vorgesehen sind. EP 2033809 A1 beschreibt eine Felge für ein Motorrad, bei der ein Hohlkammerquerschnitt vorgesehen ist, der auf der Seite des äußeren Felgenbodens sowie über die seitlichen Vorsprünge hinweg mit einem Verstärkungsüberzug versehen ist. DE 102006010445 A1 beschreibt eine Felge mit einem Felgenkörper aus Faserverbundwerkstoff, bei der vorgesehen ist, dass die seitlichen Felgenflanken als umlaufender Ring ausgebildet sind, so dass die Felge aus zwei Teilen besteht, die dauerhaft miteinander verbunden sind.

### ZUSAMMENFASSUNG DER ERFINDUNG

Demnach liegt der Erfindung die Aufgabe zugrunde, eine bezüglich des Gewichts und der Massenverteilung optimierte stabile Hohlkammerfelge für ein Zweirad zur Verfügung zu stellen.

Die Aufgabe wird gelöst durch den Gegenstand der jeweiligen unabhängigen Ansprüche. Weitere Ausführungsformen sind in den jeweiligen abhängigen Ansprüchen beschrieben.

Die Aufgabe wird gelöst durch den Gegenstand der jeweiligen unabhängigen Ansprüche. Weitere Ausführungsformen sind in den jeweiligen abhängigen Ansprüchen beschrieben.

In einer Ausgestaltung der Erfindung weist eine Hohlkammerfelge für ein Zweirad einen inneren Felgenboden, einen äußeren Felgenboden, eine erste Schenkelwand und eine zweite Schenkelwand auf. Hierbei bildet der innere Felgenboden, der äußere Felgenboden, die erste Schenkelwand und die zweite Schenkelwand aus einem ersten Material eine Hohlkammerwandung. Zumindest Bereiche des äußeren Felgenbodens, der ersten Schenkelwand und der zweiten Schenkelwand sind zweilagig ausgeführt. Eine erste Lage ist zur Innenseite der Hohlkammerwandung gerichtet und besteht aus dem ersten Material. Eine zweite Lage besteht aus einem von dem ersten Material verschiedenen zweiten Material. Die Hohlkammerwandung weist im Bereich der zweilagigen Ausgestaltung in der ersten Lage mindestens einen Durchbruch auf, bei dem das erste Material entfernt ist.

Somit wird aus der ersten Lage ein erstes Material entfernt, das mit einer zweiten Lage aus einem zweiten Material verschlossen wird. Das Entfernen des ersten Materials erfolgt aus den Bereichen des äußeren Felgenbodens, der ersten Schenkelwand und/oder der zweiten Schenkelwand, an Stellen, die gering beansprucht sind. Es besteht somit die Möglichkeit, einen vorgegebenen Bereich des äußeren Felgenbodens, der ersten Schenkelwand und/oder der zweiten Schenkelwand mit unterschiedlich geformten Durchbrüchen zu versehen, so dass in diesen vorgegebenen Bereichen eine Skelettstruktur bestehen bleibt. Mit anderen Worten ausgedrückt ist es also möglich, einen größeren Durchbruch zu verstreben, so dass sich dieser größere Durchbruch im Erscheinungsbild als aus mehreren kleinen Durchbrüchen zusammengesetzt darstellt. Ebenso können die Ränder von den jeweiligen Durchbrüchen zu dem äußeren Felgenboden, zu der ersten Schenkelwand und/oder der zweiten Schenkelwand individuell gestaltet sein. Es kann die Hohlkammerwandung zu den Durchbrüchen beispielsweise abgeschrägt oder hohlkehlenartig gestaltet sein. Die zweite Lage dient dazu, dass die Durchbrüche in der ersten Lage verschlossen werden. Die zweite Lage kann beispielsweise die Durchbrüche in der ersten Lage wie eine Haut abdecken, also flexibel sein. Diese zweite Lage verhindert ein Eindringen von beispielsweise Schmutz und/oder Wasser durch die Durchbrüche in die Hohlkammerfelge.

In einer weiteren Ausgestaltung der Erfindung weist die Hohlkammerfelge wenigstens eine Öffnung in wenigstens einem von dem äußeren Felgenboden, der ersten Schenkelwand und der zweiten Schenkelwand zur Aufnahme eines Speichennippels auf. Hierbei ist der wenigstens eine Durchbruch zwischen zwei benachbarten Öffnungen ausgeformt.

Diese Öffnung kann sich auch durch den inneren Felgenboden fortsetzen. Somit kann durch den inneren Felgenboden hindurch der Speichennippel eingesetzt werden. Wenn die Öffnung im inneren Felgenboden fehlt, wird der Speichennippel nur in den äußeren Felgenboden eingesetzt. Das Einsetzen des Speichennippels erfolgt dann, bevor der wenigstens eine Durchbruch durch die zweite Lage verschlossen ist. Wenn die Öffnung zur Montage des Speichennippels in dem inneren Felgenboden fehlt, kann die Hohlkammerfelge auch für sogenannte Schlauchlosreifen verwendet werden.

Die zweite Lage der Hohlkammerfelge ist als ein selbsttragender Deckel ausgeformt, wobei der wenigstens eine Durchbruch durch den Deckel verschlossen ist. Der Deckel erstreckt sich hierbei entlang eines inneren Umfangs der Hohlkammerfelge.

Da der Deckel selbsttragend ausgeformt ist, kann er als eigenes Bauteil hergestellt sein. Beispielsweise ist es denkbar, diesen Deckel als ein Spritzgussteil beispielsweise aus Kunststoff herzustellen. Entsprechend können der Durchbruch und der Deckel so gestaltet sein, dass beim Verschließen des Durchbruchs der Deckel selbständig verriegelt. Somit wird die zuvor erwähnte Haut durch einen Deckel realisiert, der möglicherweise ohne zusätzliche Dichtung ein Eindringen von Schmutz, und Feuchtigkeit in die Hohlkammerfelge verhindert. Natürlich kann der Deckel dabei bündig mit der Außenseite der ersten Lage sein oder auch überstehen. Auch ist es möglich, dass die erste Lage bündig mit der Innenseite der ersten Lage ist. Es ist des Weiteren möglich, dass der Deckel in seinem Querschnitt dünner als die erste Lage im Querschnitt ausgeformt ist und damit der Deckel so mit der ersten Lage befestigt ist, dass sich der Deckel zwischen einem sich durch den Durchbruch ergebenden Rand an der Außenseite der ersten Lage und einem sich durch den Durchbruch ergebenden Rand an der Innenseite der ersten Lage befindet. Auch kann der Deckel in einer weiteren Ausführung diese beiden Ränder überdecken.

In einer weiteren Ausgestaltung der Erfindung ist die zweite Lage der Hohlkammerfelge als ein selbsttragender Ring entlang eines inneren Umfangs der Hohlkammerfelge ausgebildet.

Der selbsttragende Ring kann einstückig ausgeführt sein. Um den selbsttragenden Ring an den inneren Umfang der Hohlkamnterfelge montieren zu können, kann der Ring an einer Stelle aufgetrennt sein. Somit kann der Ring zum Einbringen in die erste Lage der Hohlkammerfelge in seinem Durchmesser verkleinert werden. Der Ring kann auch Öffnungen für die Speichennippel aufweisen. Natürlich können die Öffnungen, durch die die Speichennippel hindurch gesteckt werden, auch größer sein als der Durchmesser der Speichennippel. Ein durchgehender Ring zum Versehließen der einzelnen Durchbrüche kann gegenüber dem Verschließen mit einzelnen Deckeln einen Montage- und Handlingsvorteil bedeuten. Der selbsttragende Ring kann so gestaltet sein, dass der Bereich der ersten Lage, der die Öffnungen für die Speichennippel aufweist, gegenüber der Außenseite des Rings vorsteht, bündig ist oder zurücksteht. Auch können, damit beispielsweise die Öffnungen im Ring zentrisch über den Öffnungen des äußeren Felgenbodens liegen, sich an der Innenseite des Ringes Erhebungen beispielsweise in Form von Rastnippel befinden, die sich am Rand des wenigstens einen Durchbruchs abstützen. Somit wird der Ring relativ zu der ersten Lage zumindest in Umfangsrichtung der Felge in einer vorbestimmten Lage fixiert. In dieser Ausführungsform gleicht die Außenseite des Ringes der ersten Lage ohne Durchbrüche. In einer zweiten Ausführungsform ist es auch möglich, die Erhebung an der Innenseite des Ringes in Form einer Raststufe so zu gestalten, dass die Oberfläche der Raststufe erhaben und parallel zu der Oberfläche der Ringinnenseite verläuft. Um hierbei Materialanhäufungen im Bereich der Raststufe zu vermeiden, kann dann die Außenseite des Ringes derart gestaltet sein, dass die Außenseite des Ringes der Innenseite inklusive der Oberfläche der Raststufe folgt. Somit bilden sich an der Außenseite des Ringes Dellen im Bereich dieser Raststufen aus.

In einer weiteren Ausgestaltung der Erfindung ist die zweite Lage der Hohlkammerfelge mit der ersten Lage verklebt.

Durch das Verkleben der zweiten Lage mit der ersten Lage wird ein zuverlässiges Abdichten der Durchbrüche in der ersten Lage gegenüber Schmutz und Feuchtigkeit erreicht. Somit ist der Einsatz von weiterem Dichtungsmaterial nicht notwendig.

In einer weiteren Ausgestaltung der Erfindung ist das zweite Material der Hohlkammerfelge ausgelegt, um eine Zugspannung aufzunehmen.

Während des Betriebs der Hohlkammerfelge entstehen Biege- und Torsionsmomente. Diese können zu einer Veränderung der äußeren Kontur wenigstens eines der Durchbrüche führen. Wenn nun das zweite Material der zweiten Lage ausgelegt ist, um Zugspannungen aufzunehmen, wird wenigstens ein Teil der entstehenden Biege- und Torsionskräfte durch diese zweite Lage, die beispielsweise als ein selbsttragender Deckel oder ein selbsttragender Ring ausgebildet ist, aufgenommen. Somit versteift die zweite Lage die Hohlkammerfelge. Insbesondere bei einem Verkleben der zweiten Lage mit der ersten Lage können die auftretenden Kräfte oder Spannungen von der ersten Lage über den Klebstoff in die zweite Lage eingebracht werden und umgekehrt.

In einer weiteren Ausgestaltung der Erfindung weist die erste Lage der Hohlkammerfelge eine mindestens teilweise entlang der ersten und/oder zweiten Schenkelwand verlaufende Nut auf. Die zweite Lage ist in diese wenigstens eine Nut hineingeschoben.

Durch das Hineinschieben der zweiten Lage, die beispielsweise durch den selbsttragenden Ring oder den selbsttragenden Deckel gebildet wird, in diese Nut erfolgt eine Zentrierung der zweiten Lage zu der ersten Lage sowohl in Umfangsrichtung als auch quer hierzu. Durch ein entsprechendes Gestalten der Nut der ersten Lage und des Randes der zweiten Lage, der in diese Nut hineingeführt ist, kann vermieden werden, dass im montierten Zustand die zweite Lage in Umfangsrichtung eine überstehende Kante aufweist. Um ein Eingreifen der zweiten Lage in die Nut der ersten Lage zu erreichen, kann die zweite Lage entsprechend elastisch verformt werden.

In einer weiteren Ausgestaltung der Erfindung weist die erste Lage der Hohlkammerfelge einen mindestens teilweise entlang der ersten und/oder zweiten Schenkelwand verlaufenden Rücksprung auf. Hierbei greift die zweite Lage derart in diesen wenigstens einen Rücksprung ein, dass eine Außenseite der zweiten Lage bündig mit einer Außenseite der ersten und/oder zweiten Schenkelwand ist.

In dieser Ausgestaltung gibt es zwischen der ersten Lage und zweite Lage keine Vorsprünge oder Rücksprünge. Somit kann Schmutz, dem sich die Hohlkammerfelge während des Betriebes ausgesetzt sieht, problemlos entfernt werden. Neben der Pflegeleichtigkeit der Felge ergibt sich auch ein apartes Aussehen für den Betrachter. In einer weiteren Ausgestaltung der Erfindung ist ein spezifisches Gewicht des ersten Materials der Hohlkammerfelge größer als ein spezifisches Gewicht des zweiten Materials.

Somit ist das Material, aus dem die zweite Lage gefertigt ist, leichter als das Material, aus dem die erste Lage gefertigt ist. Da die zweite Lage auch Zugspannungen aufnehmen kann, ist es somit möglich, Hohlkammerfelgen zu fertigen, die bei einer vorbestimmten Festigkeit leichter sind als wenn sie nur aus dem ersten Material gefertigt werden würden. Somit ist eine Gewichtseinsparung der zweilagig gefertigten Hohlkammerfelge gegenüber der lediglich aus der ersten Lage bestehenden Hohlkammerfelge bei gleicher Festigkeit von etwa 30% und mehr möglich. Analog ist bei einem gleichen Gewicht der einlagig aus dem ersten Material gefertigten Hohlkammerfelge im Vergleich zu der zweilagig aus dem ersten und dem zweiten Material gefertigten Hohlkammerfelge die Festigkeit der zweilagig gefertigten Hohlkammerfelge größer als die der einlagig gefertigten und kann somit höhere Kräfte aufnehmen.

In einer weiteren Ausgestaltung der Erfindung weist die erste Lage der Hohlkammerfelge Aluminium auf.

Die erste Lage der Hohlkammerfelge braucht nicht aus reinem Aluminium gefertigt zu sein, sondern sie kann auch aus Aluminiumlegierungen hergestellt sein. Diese Aluminiumlegierungen können spritzgießfähig sein, damit die Hohlkammerfelgen kostengünstig als Strangpressprofile gefertigt werden können. Diese Strangpressprofile werden beispielsweise um einen Kreiszylinder spiralenförmig gewickelt und so aufgetrennt, dass sich in der Seitenansicht ein geschlossener Kreisring ergibt. Die beiden sich ergebenden Ränder des Hohlprofils werden bündig ausgerichtet und miteinander fest verbunden. Als Alternativen stehen hierbei ein miteinander Verschweißen oder ein Fixieren mittels in der Hohlkammer eingelegte Einsteckteile zur Auswahl.

In einer weiteren Ausgestaltung der Erfindung ist die erste Lage der Hohlkammerfelge aus einer Aluminiumlegierung hergestellt, die mit Scandium legiert ist.

Scandium erhöht die Streckfestigkeit der Aluminiumlegierung. Somit lassen sich dünnere Wandstärken und damit leichtere Hohlkammerfelgen erzeugen, als dies mit einer Legierung ohne Scandium möglich wäre. Somit ist bei gleicher Festigkeit eine Hohlkammerfelge, die aus einer Aluminiumlegierung ohne Scandium hergestellt ist, schwerer als eine Hohlkammerfelge, die aus einer Aluminiumlegierung mit Scandium hergestellt ist.

In einer weiteren Ausgestaltung der Erfindung ist die zweite Lage der Hohlkammerfelge aus einem kohlenstofffaserverstärkten Kunststoff hergestellt.

In einer weiteren Ausgestaltung der Erfindung weist ein Laufrad eine Hohlkammerfelge sowie eine Nabe und Speichen auf. Hierbei ist die Hohlkammerfelge mittels der Speichen mit der Nabe verbunden. Weiterhin weist die die zweite Lage gegenüber der ersten Lage eine höhere Elastizität auf. Die zweite Lage ist derart ausgelegt, dass sie durch die Speichen erzeugte Spannungsspitzen an der Hohlkammerfelge dämpft.

Durch ein Abrollen des Laufrades und der damit verbundenen Belastung werden an den Speichen Spannungsspitzen erzeugt und in die Hohlkammerfelge eingeleitet. Durch die Verwendung einer zweiten Lage aus kohlenstofffaserverstärktem Kunststoff, die mit der ersten Lage verklebt ist, wird ein Teil dieser Spannungsspitzen abgebaut und somit die Kräfte gedämpft über die erste Lage verteilt. Dies führt zu einer verlängerten Lebensdauer des Laufrades, das mit einer zweilagigen Hohlkammerfelge versehen ist, gegenüber einem Laufrad, das aus einer nur aus einer Aluminiumlegierung bestehenden Hohlkammerfelge aufgebaut ist. Die Lebensdauerverlängerung liegt bei etwa zehn Prozent.

### KURZE BESCHREIBUNG DER ZEICHNUNGEN

- Figur 1: zeigt eine zweilagig ausgebildete Hohlkammerfelge im Querschnitt gemäß einer Ausführungsform der Erfindung,
- Figur 2: zeigt eine erste Lage einer Hohlkammerfelge in einer dreidimensionalen Darstellung gemäß einer Ausführungsform der Erfindung,
- Figur 3: zeigt eine erste Ausführungsform einer zweilagig ausgebildeten Hohlkammerfelge in einer dreidimensionalen Ansicht gemäß einer Ausführungsform der Erfindung,
- Figur 4: zeigt die Hohlkammerfelge aus Figur 3 in Seitenansicht,
- Figur 5: zeigt eine zweite Ausführungsform einer zweilagig ausgebildeten Hohlkammerfelge in einer dreidimensionalen Ansicht gemäß einer Ausführungsform der Erfindung,
- Figur 6: zeigt die Hohlkammerfelge aus Figur 5 in Seitenansicht,
- Figur 7: zeigt eine erste Ausführungsform einer Befestigung der zweiten Lage mit der ersten Lage im Querschnitt,
- Figur 8: zeigt eine zweite Ausführungsform einer Befestigung der zweiten Lage mit der ersten Lage im Querschnitt und
- Figur 9: zeigt eine dritte Ausführungsform einer Befestigung der zweiten Lage mit der ersten Lage im Querschnitt.

### DETAILLIERTE BESCHREIBUNG BEISPIELHAFTER AUSFÜHRUNGSFORMEN

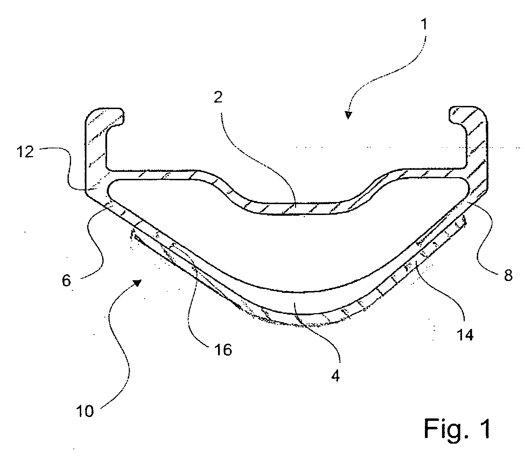

Figur 1 zeigt eine Hohlkammerfelge 1 für ein Zweirad, die aus einem inneren Felgenboden 2, einem äußeren Felgenboden 4, einer ersten Schenkelwand 6 und einer zweiten Schenkelwand 8 gebildet ist. Der innere Felgenboden 2, der äußere Felgenboden 4, die erste Schenkelwand 6 und die zweite Schenkelwand 8 bilden gemeinsam eine Hohlkammerwandung 10, die aus einer mit Scandium legierten Aluminiumlegierung besteht und eine erste Lage 12 bildet. In dem hier dargestellten Ausführungsbeispiel ist die erste Lage 12 an ihrer Außenseite in einem Teilbereich mit einer zweiten Lage 14 überzogen. Der Teilbereich erstreckt sich über den äußeren Felgenboden 4, einen Teilbereich der ersten Schenkelwand 6 und einen Teilbereich der zweiten Schenkelwand 8. Der Werkstoff der zweiten Lage 14 ist zu dem Wertstoff der ersten Lage 12 verschieden und hier als ein kohlenstoffverstärkter Kunststoff (CfK) ausgebildet. Die erste Lage 12 ist im Bereich des äußeren Felgenbodens 4 sowie der ersten Schenkelwand 6 und der zweiten Schenkelwand 8 mit einem Durchbruch 16 versehen, wobei innerhalb des Durchbruchs 16 das gesamte Material der ersten Lage 12 entfernt wurde.

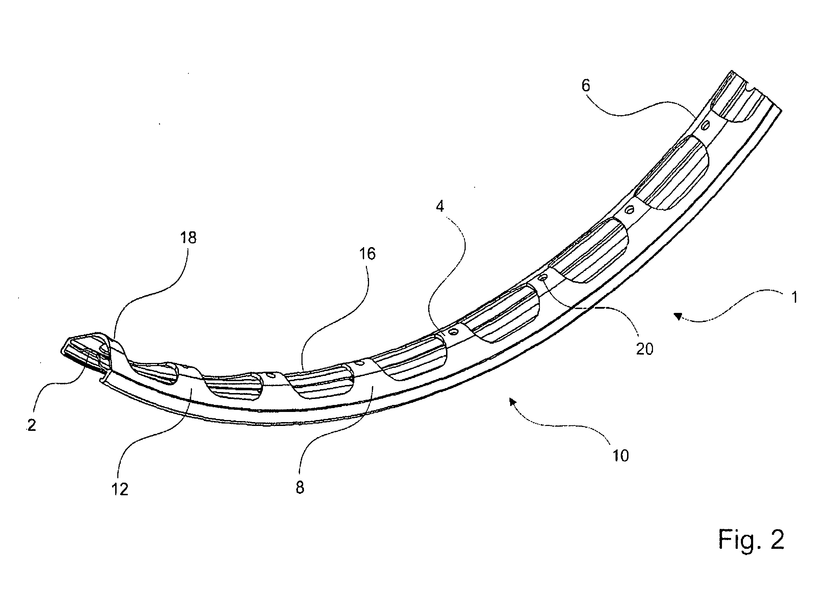

Figur 2 zeigt die erste Lage 12 der Hohlkammerfelge 1 in einer dreidimensionalen Ansicht. Hierbei sind entlang eines inneren Umfangs 18 im Bereich des äußeren Felgenbodens 4 Öffnungen 20 eingebracht, die sich regelmäßig über den äußeren Felgenboden 4 verteilen. Durch diese Öffnungen 20 werden hier nicht dargestellte Speichennippel eingebracht. Zwischen zwei benachbarten Öffnungen 20 erstrecken sich die Durchbrüche 16, wobei um die Öffnungen 20 Teilbereiche des äußeren Felgenbodens 4 erhalten bleiben. Diese Teilbereiche erstrecken sich entlang des inneren Umfangs 18 symmetrisch zur Öffnung 20. In Querrichtung zum inneren Umfang 18 erstrecken sich die Durchbrüche 16 über den äußeren Felgenboden 4 bis in die beiden Schenkelwände 6 und 8 hinein. Vorzugsweise werden diese Durchbrüche 16 in der ersten Lage 12 nach deren Fertigstellung durch einen Fräsvorgang erstellt.

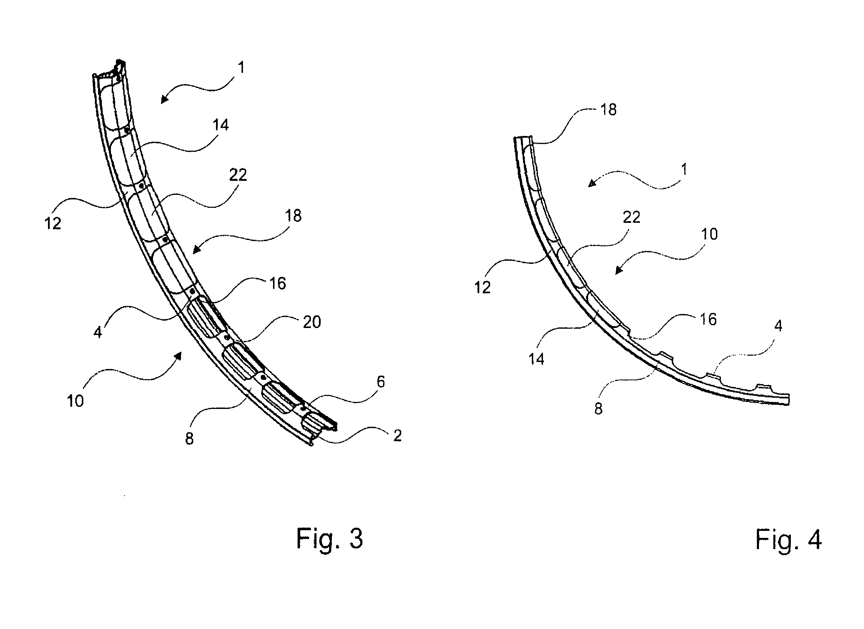

Figur 3 zeigt eine erste Ausführungsform der zweilagigen Hohlkammerfelge aus Figur 1 in dreidimensionaler Ansicht. Hierbei sind die Durchbrüche 16 in der ersten Lage 12 der Hohlkammerfelge 1 durch die zweite Lage 14, die in dem hier vorliegenden Ausführungsbeispiel als ein selbsttragender Deckel 22 ausgebildet ist, verschlossen. Die selbsttragenden Deckel 22 sind aus Gewichtsgründen aus kohlenfaserverstärktem Kunststoff hergestellt.

Insbesondere in Figur 4, die die erste Ausführungsform der zweilagigen Hohlkammerfelge 1 in der Seitenansicht darstellt, ist ersichtlich, dass der Deckel 22 mit dem äußeren Felgenboden 4 sowie den beiden Schenkelwänden 6 und 8 bündig abschließt. Weiterhin ist ersichtlich, dass der Deckel 22 die Kontur des äußeren Felgenbodens 4 sowie der beiden Schenkelwände 6 und 8 aufnimmt und somit in ästhetisch ansprechender Weise die Linienführung der ersten Lage 12 fortführt. Zusätzlich ergibt sich durch die dreidimensionale Verformung des Deckels 22 eine hohe Festigkeit oder Stabilität. Zwar kann der Deckel 22 in den Durchbrüchen 16 mittels Clipsen fixiert sein, jedoch ist er in der hier vorliegenden Ausführungsfonn entlang seines Randes mit dem äußeren Felgenboden 4 sowie den beiden Schenkelwänden 6 und 8 vollflächig verklebt. Dies bietet zum einen den Vorteil, dass während des Betriebs der Felge 1 an der ersten Lage 12 auftretende Kräfte durch die Deckel 22 mit aufgenommen und auch weitergeleitet werden können. Somit erhöht der Deckel 22 die Stabilität der Hohlkammerfelge 1. Zum anderen kann Wasser oder Schmutz, dem sich die Hohlkammerfelge 1 während des Gebrauchs ausgesetzt sieht, nicht in die durch die Hohlkammerwandung 10 gebildete Hohlkammer gelangen.

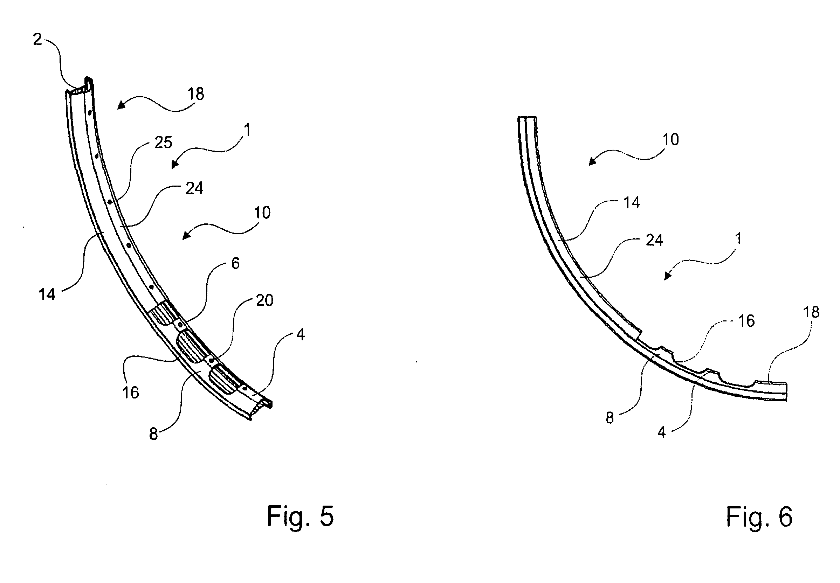

Figur 5 zeigt eine zweite Ausführungsform der zweilagigen Hohlkammerfelge 1 in einer dreidimensionalen Ansicht. Im Gegensatz zu dem in Figur 3 dargestellten Verschließen der Öffnungen 16 mittels einzelner Deckel 22 werden in dem hier vorliegenden Ausführungsbeispiel sämtliche Durchbrüche 16 mittels eines selbsttragenden Ringes 24 verschlossen, der sich entlang des inneren Umfangs 18 der Hohlkammerfelge 1 erstreckt. Der selbsttragende Ring 24 besitzt Öffnungen 25, die in montiertem Zustand über den Öffnungen 20 in dem äußeren Felgenboden 4 zu liegen kommen. Natürlich können die Öffnungen 25 in dem selbsttragenden Ring 24 auch größer sein als die Öffnungen 20 in dem äußeren Felgenboden 4. Der selbsttragende Ring 24 ist in der hier dargestellten Ausführungsform aus kohlenstoffverstärktem Kunststoff hergestellt und vollflächig mit der ersten Lage 12 verklebt. Die sich hieraus ergebenden Vorteile gegenüber einem bloßen Stecken sind bereits unter Figur 3 beschrieben. Damit die Öffnung 25 in dem selbsttragenden Ring 24 über der Öffnung 20 der ersten Lage 12 zu liegen kommt, kann sich der selbsttragende Ring 24 mittels hier nicht dargestellter Erhebungen in wenigstens einem der Durchbrüche 16 zentrieren.

Auch hier folgt, wie in Figur 6 zu sehen ist, die die zweite Ausführungsform der Hohlkammerfelge 1 in der Seitenansicht darstellt, der selbsttragende Ring 24 der Linienführung der ersten Lage 12. Um den selbsttragenden Ring 24 auf die erste Lage 12 aufbringen zu können, ist der selbsttragende Ring 24 an einer Stelle quer zum inneren Umfang 18 geteilt. Natürlich kann die Trennlinie auch in einem Winkel kleiner als 90° zum inneren Umfang 18 erfolgen. Hierdurch kann der äußere Umfang des selbsttragenden Rings 24 durch Vorspannen so verkleinert werden, dass der Ring 24 über den äußeren Felgenboden 4 gezogen und in die erste Lage 12 eingebracht werden kann. Nach dem Entspannen des selbsttragenden Ringes 24 liegt nun seine Innenseite an der Außenseite des äußeren Felgenbodens 4 sowie den beiden Schenkelwänden 6 und 8 an.

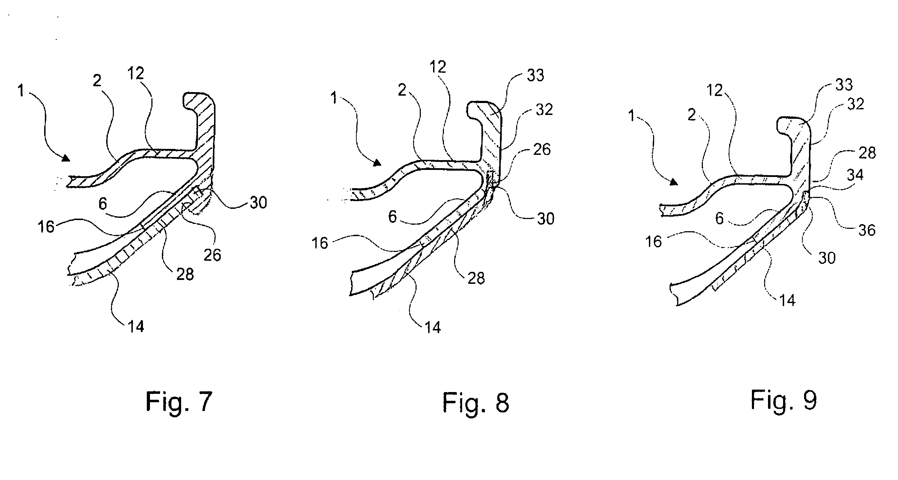

Figur 7 zeigt eine erste Ausführungsform einer Befestigung der zweiten Lage 14 mit der ersten Lage 12 im Querschnitt. Deutlich sichtbar ist, dass in der Nähe des Zusammentreffens der ersten Schenkelwand 6 mit dem inneren Felgenboden 2 eine Nut 26 gebildet ist, wobei die Nut 26 parallel zu einer Außenseite 28 der ersten Schenkelwand 6 verläuft. In diese Nut 26 wird ein Rand 30 der zweiten Lage 14, die als selbsttragender Deckel 22 oder selbsttragender Ring 24 ausgebildet ist, hineingesteckt. Somit ergibt sich für die zweite Lage 14 eine Zentrierung zur ersten Lage 12 quer zum inneren Umfang 18. Natürlich muss sich die Nut 26 nicht über den gesamten Umfang der Hohlkammerfelge 1 erstrecken, sondern kann nur in Teilbereichen vorhanden sein. Des Weiteren kann durch eine geeignete Maßnahme innerhalb der Nut 26, wie beispielsweise durch einen Vorsprung, auch eine Zentrierung der zweiten Lage 14 längs zum inneren Umfang 18 erfolgen. Durch ein vollflächiges Verkleben des Randes 30 mit der Nut 26 ist sichergestellt, dass kein Schmutz oder Wasser in eine sich zwischen diesem Rand 30 und der Nut 26 möglicherweise ergebende Fuge eindringen kann. Zudem verhindert das Verkleben, dass es während des Betriebs der Hohlkammerfelge 1 zu einer Relativbewegung der ersten Lage 12 zur zweiten Lage 14 kommt. Damit wird nicht nur ein Abrieb der Materialien der ersten 12 und/oder zweiten Lage 14 verhindert, sondern auch der Entstehung von Quietsch- oder Kratzgeräuschen vorgebeugt.

Figur 8 zeigt eine zweite Ausführungsform einer Befestigung der zweiten Lage 14 mit der ersten Lage 12 im Querschnitt. Auch hier wird der Rand 30 der zweiten Lage 14, die als selbsttragender Deckel 22 oder selbsttragender Ring 24 ausgebildet sein kann, in die Nut 26 gesteckt. Im Gegensatz zu dem in Figur 7 beschriebenen Ausfürungsbeispiel befindet sich hier die Nut 26 zwar ebenfalls in der ersten Schenkelwand 6 in der Nähe des Zusammentreffens der ersten Schenkelwand 6 mit dem inneren Felgenboden 2, jedoch verläuft hier die Nut 26 parallel zu einer Außenseite 32 eines Felgenhorns 33. Auch hier ist die zweite Lage 14 mit der ersten Lage 12 verklebt. Die sich hieraus ergebenden Vorteile sind bereits unter Figur 7 beschrieben.

Figur 9 zeigt eine dritte Ausführungsform einer Befestigung der zweiten Lage 14 mit der ersten Lage 12 im Querschnitt. Hierbei besitzt die erste Schenkelwand 6 in Verlängerung der Außenseite 32 des Felgenhorns 33 einen Rücksprung 34. Die zweite Lage 14, die wie in den vorhergegangenen Figuren 7 und 8 als selbsttragender Deckel 22 oder selbsttragender Ring 24 ausgebildet ist, ist so gestaltet, dass sich ihre

Innenseite der Außenseite der ersten Schenkelwand 6 anschmiegt. Insbesondere ist der Rand 30 der zweiten Lage 14 derart gestaltet, dass eine Außenseite 36 der zweiten Lage 14 bündig mit der Außenseite 28 der ersten Schenkelwand 6 verläuft, die wiederum ansatzlos in die Außenseite 32 des Felgenhorns 33 übergeht. Somit ergibt sich, wie in den Figuren 7 und 8 auch, zwischen der ersten Lage 12 und der mit ihr vollflächig verklebten zweiten Lage 14 keine Ritze oder Fuge, in der sich während des Gebrauchs der Felge Schmutz absetzen könnte. Zudem bildet sich zwischen der ersten Lage 12 und der zweiten Lage 14, die in der hier vorliegenden Ausführungsform unterschiedliche Farben aufweisen, ein scharfer Rand aus, der bei einer seitlichen Betrachtung dieser Hohlkammerfelge 1 einen ästhetischen Eindruck bewirkt. Weiter sich ergebende Vorteile sind bereits in Figur 7 beschreiben.

Während des Gebrauchs der Hohlkammerfelge 1 in einem Laufrad werden durch Speichen Spannungsspitzen erzeugt und in die erste Lage 12 eingebracht. Durch den Einsatz von kohlenstofffaserverstärkten Kunststoff in der zweiten Lage 14 wird ein Teil dieser Spannungsspitzen abgebaut. Somit werden Kräfte nach dem Einleiten in die erste Lage 12 und Weiterleiten in die zweite Lage 14, die mit der ersten Lage 12 verklebt ist, von dieser gedämpft über die erste Lage 12 verteilt. Dies führt zu einer verlängerten Lebensdauer der zweilagig ausgeführten Hohlkammerfelge 1 gegenüber einer einlagig aus einer Aluminiumlegierung hergestellten Hohlkammerfelge. Die Lebensdauerverlängerung eines Laufrades, das mit einer solchen Hohlkammerfelge 1 ausgestattet ist, liegt bei etwa zehn Prozent.

### Bezugszeichenliste

- 1: Hohlkammerfelge
- 2: innerer Felgenboden
- 4: äußerer Felgenboden
- 6: erste Schenkelwand
- 8: zweite Schenkelwand
- 10: Hohlkammerwandung
- 12: erste Lage
- 14: zweite Lage
- 16: Durchbruch
- 18: innerer Umfang
- 20: Öffnung im äußeren Felgenboden
- 22: selbsttragender Deckel
- 24: selbsttragender Ring
- 25: Öffnung im selbsttragenden Ring
- 26: Nut
- 28: Außenseite einer Schenkelwand
- 30: Rand der zweiten Lage
- 32: Außenseite des Felgenhorns
- 33: Felgenhorn
- 34: Rücksprung
- 36: Außenseite der zweiten Lage

## Patentansprüche

1. Hohlkammerfelge für ein Zweirad, wobei die Hohlkammerfelge (1) aufweist:
einen inneren Felgenboden (2)
einen äußeren Felgenboden (4);
eine erste Schenkelwand (6);
eine zweite Schenkelwand (8);
wobei der innere Felgenboden (2), der äußere Felgenboden (4), die erste Schenkelwand (6) und die zweite Schenkelwand (8) aus einem ersten Material eine Hohlkammerwandung (10) bilden;
wobei zumindest Bereiche des äußeren Felgenbodens (4), der ersten Schenkelwand (6) und der zweiten Schenkelwand (8) zweilagig ausgeführt sind;
wobei eine erste Lage (12) zur Innenseite der Hohlkammerwandung (10) gerichtet ist und aus dem ersten Material besteht;
wobei eine zweite Lage (14) aus einem von dem ersten Material verschiedenen zweiten Material besteht; und
**dadurch gekennzeichnet, dass**
die Hohlkammerwandung (10) im Bereich der zweilagigen Ausgestaltung (12, 14) in der ersten Lage (12) eine Vielzahl von Durchbrüchen (16) aufweist, bei denen das erste Material entfernt ist;
wobei die Durchbrüche durch die zweite Lage verschlossen sind.

2. Hohlkammerfelge nach Anspruch 1,
wobei die Hohlkammerfelge (1) wenigstens eine Öffnung (18) in wenigstens einem von dem äußeren Felgenboden (4), der ersten Schenkelwand (6) und der zweiten Schenkelwand (8) zur Aufnahme eines Speichennippels aufweist; und
wobei der wenigstens eine Durchbruch (16) zwischen zwei benachbarten Öffnungen (20) ausgeformt ist.

3. Hohlkammerfelge nach Anspruch 1 oder 2,
wobei die zweite Lage (14) als ein selbsttragender Deckel (22) ausgeformt ist,
wobei der wenigstens eine Durchbruch (16) durch den Deckel (22) verschlossen ist, und
wobei sich der Deckel (22) entlang eines inneren Umfangs (18) der Hohlkammerfelge (1) erstreckt.

4. Hohlkammerfelge nach Anspruch 1 oder 2,
wobei die zweite Lage (14) als ein selbsttragender Ring (24) entlang eines inneren Umfangs (18) der Hohlkammerfelge (1) ausgebildet ist.

5. Hohlkammerfelge nach einem der vorhergehenden Ansprüche,
wobei die zweite Lage (14) mit der ersten Lage (12) verklebt ist.

6. Hohlkammerfelge nach einem der vorhergehenden Ansprüche,
wobei das zweite Material ausgelegt ist, um eine Zugbeanspruchung aufzunehmen.

7. Hohlkammerfelge nach einem der Ansprüche 3 bis 6,
wobei die erste Lage (12) eine mindestens teilweise entlang der ersten (6) und/oder zweiten Schenkelwand (8) verlaufende Nut (26) aufweist, und
wobei die zweite Lage (14) in diese wenigstens eine Nut (26) hineingeschoben ist.

8. Hohlkammerfelge nach einem der Ansprüche 3 bis 6,
wobei die erste Lage (12) einen mindestens teilweise entlang der ersten (6) und/oder zweiten Schenkelwand (8) verlaufenden Rücksprung (34) aufweist, und
wobei die zweite Lage (14) derart in diesen wenigstens einen Rücksprung (34) eingreift, dass eine Außenseite (36) der zweiten Lage (14) bündig mit einer Außenseite (28) der ersten (6) und/oder zweiten Schenkelwand (8) ist.

9. Hohlkammerfelge nach einem der vorhergehenden Ansprüche,
wobei ein spezifisches Gewicht des ersten Materials größer als ein spezifisches Gewicht des zweiten Materials ist.

10. Hohlkammerfelge nach einem der vorhergehenden Ansprüche,
wobei die erste Lage (12) Aluminium aufweist.

11. Hohlkammerfelge nach Anspruch 10,
wobei die erste Lage (12) aus einer Aluminiumlegierung hergestellt ist, die mit Scandium legiert ist.

12. Hohlkammerfelge nach einem der vorhergehenden Ansprüche,
wobei die zweite Lage (14) aus einem kohlenstofffaserverstärkten Kunststoff hergestellt ist.

13. Laufrad mit
einer Hohlkammerfelge (1) nach einem der Ansprüche 1 bis 12,
einer Nabe; und
Speichen;
wobei die Hohlkammerfelge (1) mittels der Speichen mit der Nabe verbunden ist;
wobei die zweite Lage (14) gegenüber der ersten Lage (12) eine höhere Elastizität aufweist und die zweite Lage (14) derart ausgelegt ist, dass sie durch die Speichen erzeugte Spannungsspitzen an der Hohlkammerfelge (1) dämpft.

## Claims

1. A hollow rim for a bicycle, the hollow rim (1) comprising:
an inner rim base (2)
an outer rim base (4);
a first side piece wall (6)
a second side piece wall (8);
wherein the inner rim base (2), the outer rim base (4),
the first side piece wall (6) and the second side piece wall (8) form a hollow chamber wall (10) from a first material;
wherein at least regions of the outer rim base (4), the first side piece wall (6) and the second side piece wall (8) are formed double-layered;
wherein a first layer (12) is directed toward the inner side of the hollow chamber wall (10) and consists of a first material;
wherein a second layer (14) consists of a second material which is different from the first material; and **characterized in that**
in the region of the double-layered configuration (12, 14), the hollow chamber wall (10) comprises in the first layer (12) a plurality of apertures (16) where the first material is removed;
wherein said apertures are closed by the second layer.

2. The hollow rim according to claim 1,
wherein the hollow rim (1) has at least one opening (18) in at least one of the outer rim base (4), the first side piece wall (6) and the second side piece wall (8) for receiving a spoke nipple; and
wherein the at least one aperture (16) is formed between two adjacent openings (20).

3. The hollow rim according to claim 1 or claim 2,
wherein the second layer (14) is formed as a self-supporting cover (22), wherein the at least one aperture (16) is closed by the cover (22),
and
wherein the cover (22) extends along an inner circumference (18) of the hollow rim (1).

4. The hollow rim according to claim 1 or claim 2,
wherein the second layer (14) is formed as a self-supporting ring (24) along an inner circumference (18) of the hollow rim (1).

5. The hollow rim according to any one of the preceding claims,
wherein the second layer (14) is glued to the first layer (12).

6. The hollow rim according to any one of the preceding claims,
wherein the second material is designed in order to absorb a tensile load.

7. The hollow rim according to any one of the claims 3 to 6,
wherein the first layer (12) has a groove (26) which extends at least partially along the first (6) and/or the second side piece wall (8), and
wherein the second layer (14) is slid into said at least one groove (26).

8. The hollow rim according to any one of the claims 3 to 6,
wherein the first layer (12) has a recess (34) which extends at least partially along the first (6) and/or second side piece wall (8), and
wherein the second layer (14) engages in said at least one recess (34) in such a manner that an outer side (36) of the second layer (14) is flush with an outer side (28) of the first (6) and/or the second side piece wall (8).

9. The hollow rim according to any one of the preceding claims,
wherein a specific weight of the first material is greater than a specific weight of the second material.

10. The hollow rim according to any one of the preceding claims,
wherein the first layer (12) comprises aluminum.

11. The hollow rim according to claim 10,
wherein the first layer (12) is made from an aluminum alloy which is alloyed with scandium.

12. The hollow rim according to any one of the preceding claims,
wherein the second layer (14) is made from a carbon fiber-reinforced plastic.

13. A wheel, comprising
a hollow rim (1) according to any one of the claims 1 to 12,
a hub; and
spokes;
wherein the hollow rim (1) is connected to the hub by means of the spokes;
wherein the second layer (14) has a higher elasticity with respect to the first layer (12), and the second layer (14) is designed in such a manner that it attenuates stress peaks generated by the spokes on the hollow rim (1).

## Revendications

1. Jante à compartiment creux pour un deux-roues, la jante à compartiment creux (1) comprenant :
un fond de jante intérieur (2) ;
un fond de jante extérieur (4) ;
une première paroi de branche (6) ;
une seconde paroi de branche (8) ;
le fond de jante intérieur (2), le fond de jante extérieur (4), la première paroi de branche (6) et la seconde paroi de branche (8) formant, en un premier matériau, une paroi de compartiment creux (10) ;
au moins des zones du fond de jante extérieur (4), de la première paroi de branche (6) et de la seconde paroi de branche (8), ayant une réalisation à deux couches ;
une première couche (12) étant orientée en direction du côté intérieur de la paroi de compartiment creux (10) et se composant du premier matériau ;
une seconde couche (14) se composant d'un second matériau différent du premier ;
**caractérisée en ce que**
la paroi de compartiment creux (10) présente dans la première couche (12), dans la zone de la configuration à deux couches (12, 14), une multiplicité de percées (16),
dans lesquelles le premier matériau est enlevé ;
les percées étant fermées par la seconde couche.

2. Jante à compartiment creux selon la revendication 1,
la jante à compartiment creux (1) présentant au moins une ouverture (18) dans au moins un fond de jante extérieur (4), la première paroi de branche (6) ou la seconde paroi de branche (8), pour recevoir un écrou de rayon ; et
la au moins une percée (16) étant mise en forme entre deux ouvertures (20) voisines.

3. Jante à compartiment creux selon l'une des revendications 1 et 2,
la seconde couche (14) étant réalisée sous forme de couvercle autoporteur (22),
la au moins une percée (16) étant fermée par le couvercle (22), et
le couvercle (22) s'étendant le long d'un pourtour intérieur (18) de la jante à compartiment creux (1).

4. Jante à compartiment creux selon l'une des revendications 1 et 2,
la seconde couche (14) étant réalisée sous forme d'anneau autoporteur (24) le long d'un pourtour intérieur (18) de la jante à compartiment creux (1).

5. Jante à compartiment creux selon l'une des revendications précédentes,
la seconde couche (14) étant collée avec la première couche (12).

6. Jante à compartiment creux selon l'une des revendications précédentes,
le second matériau étant conçu pour absorber une contrainte de traction.

7. Jante à compartiment creux selon l'une des revendications 3 à 6,
la première couche (12) présentant une gorge (26) qui s'étend, au moins en partie, le long de la première (6) et/ou de la seconde (8) paroi de branche, et
la seconde couche (14) étant insérée dans cette au moins une gorge (26).

8. Jante à compartiment creux selon l'une des revendications 3 à 6,
la première couche (12) présentant un retrait (34) qui s'étend, au moins en partie, le long de la première (6) et/ou de la seconde (8) paroi de branche, et
la seconde couche (14) pénétrant dans ce au moins un retrait (34) de telle sorte qu'un côté extérieur (36) de la seconde couche (14) affleure avec un côté extérieur (28) de la première (6) et/ou de la seconde (8) paroi de branche.

9. Jante à compartiment creux selon l'une des revendications précédentes,
un poids volumique du premier matériau étant plus élevé qu'un poids volumique du second matériau.

10. Jante à compartiment creux selon l'une des revendications précédentes,
la première couche (12) présentant de l'aluminium.

11. Jante à compartiment creux selon la revendication 10,
la première couche (12) étant fabriquée en un alliage d'aluminium, allié à du scandium.

12. Jante à compartiment creux selon l'une des revendications précédentes,
la seconde couche (14) étant fabriquée en une matière plastique renforcée par fibres de carbone.

13. Roue comprenant
une jante à compartiment creux (1) selon l'une des revendications 1 à 12,
un moyeu ; et
des rayons ;
la jante à compartiment creux (1) étant assemblée avec le moyeu au moyen des rayons ;
la seconde couche (14) présentant par rapport à la première couche (12) une élasticité plus élevée et la seconde couche (14) étant conçue de telle sorte qu'elle amortit sur la jante à compartiment creux (1) des pics de contrainte produits par les rayons.
